# EUROPEAN PATENT SPECIFICATION

(11) **EP 1 749 120 B1**
(45) Date of publication and mention of the grant of the patent: **07.05.2008**
(21) Application number: 05739672.3
(22) Date of filing: 13.05.2005
(51) Int. Cl.: C25B 11/04, C25B 11/02, C02F 1/461

(54) **LARGE-DIMENSION ELECTRODE**
GROSSE ELEKTRODE
ELECTRODE DE DIMENSIONS IMPORTANTES

(30) Priority: 21.05.2004 DE 102004025669
(43) Date of publication of application: 07.02.2007
(73) Proprietor: DIACCON GmbH, 90762 Fürth (DE)
(72) Inventor: RÜFFER, Martin, 92224 Amberg (DE); FORETA, Michael, 91126 Schwabach (DE)
(74) Representative: Gassner, Wolfgang
(86) International application number: PCT/EP2005/005252
(87) International publication number: WO 2005/113860

(56) References cited:
- DE-A1- 10 025 167
- DE-U1- 29 916 125
- US-B1- 6 423 193
- KRAFT A, STADELMANN M, KIRSTEIN W: "Use of diamond electrodes for electrolytic water treatment and sterilization by anodic oxidation" GALVANOTECHNIK, vol. 91, no. 2, 2000, pages 334-339, XP008050885 Saulgau, DE

## Description

The invention relates to a large-dimension electrode in accordance with the preamble of claim 1.

Such an electrode is described for example in the International publication WO 02/061181 A2. The known large-dimension electrode is made of a plurality of flat electrode elements which are fixed with a distance in between on the surface of a flat support. A gap between the electrode elements is filled with an electric isolating material. Each electrode element is made of a silicon or silicon carbide substrate which is covered by a layer made of electroconductive diamond. The known large-dimension electrode demands for a high expenditure in manufacturing. Furthermore, the toughness of the known electrodes is not very high and the handling is complicated.

The DE 199 11 746 A1 discloses a method for making an electrode being provided with a electroconductive diamond layer. Thereby the layer is made by a CVD-process. When covering in particular substrates having larger dimensions they often go out of shape. Furthermore, the deposited diamond layer is not very homogeneous.

The DE 694 10 576 T2 describes a method for treating waste water by electrolysis with electrodes having a electroconductive diamond layer on their surface. The diamond contains a doping which makes it electroconductive. A large-dimension electrode is not described in this document.

It is an object of the present invention to provide a large-dimension electrode which can be manufactured in a simple manner at low cost. According to a further aim of the invention there shall be provided a large-dimension electrode having an improved effectiveness. A further aim of the present invention is it to provide an electrode which can be manufactured in a variety of 3-dimensional shapes.

This object is solved by the features of claim 1. Embodiments of the invention are described by the features of claims 2 to 24.

According to the present invention it is provided that the substrates are joined together by a joint which is provided on at least one of their flanges to form a mechanically stable electrode body and wherein the joint provides a electric conductivity between the substrates.

When joining the substrates together at their flanges it is advantageously not necessary to provide a support. The proposed electrode can be manufactured with less effort. The proposed joints can be manufactured such that the diamond layers of adjacent substrates lay side by side. I. e. the proposed electrode exhibits essentially a continuous diamond layer across its entire surface. The effectiveness of the proposed electrode is enhanced. Besides that, by the proposed invention it is possible to provide a large-dimension electrode which is coated on both opposite surfaces with diamond layers. Thereby the effectiveness of the electrode can be doubled.

According to the present invention a large-dimension electrode can be manufactured by joining plurality of relatively small electrode elements, each electrode element having for example a substrate with a size of 10 cm x 10 cm or like.

Such small electrode elements can be manufactured without going out of shape. Even if the electrode elements exhibit following a CVD-process a curvature such an deviation from the original shape of the substrate can be compensated when joining the substrate elements. In this case, the large-dimension electrode may have an undulating surface. However, the large-dimension electrode has general a flat shape which can be easily attached to a mounting structure.

According to an embodiment of an invention the diamond and/or the substrates has/have an electrical resistance of less than 100 Ωcm, preferably of less than 0,1 Ωcm. Advantageously the joint between the substrates has in a similar manner an electrical resistance of less than 100 Ωcm, preferably of less than 0,1 Ωcm. Thereby a sufficient electrical conductivity across the joined substrates is guaranteed. It is in particular not necessary to provide a support or the like in order to connect the substrates electrically.

According to a further embodiment the diamond contains a doping. The doping can comprise at least one of the following substances: boron, nitrogen. The amount of the doping contained in the diamond can be in the range of 10 ppm to 3000 ppm, preferably in the range of 100 ppm to 1000 ppm. By the proposed doping the aforementioned electrical resistance of the diamond can be adjusted.

According to further embodiments the joint provides a force locked linkage and/or a metallic continuity of the substrates. The force locked linkage may be made by a screw joint, a retrieved joint, a clamped joint, a rebated joint or a push fit fitting. In order to provide a suitable joining surface it is possible that the substrate is not coated with diamond along those flanges which are connected by the joints. Furthermore the flanges of the substrate may be bent for example in a S-like manner to receive on a bend portion of the flange a portion of an adjacent substrate. The flange may also be bent or formed like a groove in which the flange of an adjacent substrate may be inserted.

The metallic continuity of the joined substrates is preferably made by a welded joint. The welded joint can be made by diffusion welding, electron beam welding or laser welding. It is also possible to use other suitable welding techniques. Such welding techniques are known to the skilled artisan.

The welded joint is preferably made on the side of the substrate which is not covered with a diamond layer. However, it is also possible to provide in particular a welded joint on each side of the substrate along at least one flange thereof. If in particular a welded joint is provided on the side of the substrate which is covered by a diamond layer the joint may be covered by an anti-corrosion layer. The anti-corrosion layer may be a self passivation layer of the metal or may be made of an organic material, in particular of a plastic. According to a further embodiment the self passivating layer can also consist of an anorganic material, in particular a ceramic.

According to a further embodiment the joint can also be a soldered joint. Further the joint may be made by an electroconductive polymer. Such a polymer may be a resin containing electroconductive particles like carbon fibres and the like. By hardening such a resin the substrates can easily be glued together.

The metal is preferably a self passivating metal. Under the term "self passivating metal" there is understood a metal which is passivated on its surface by the formation of an isolating layer by chemical or electrochemical oxidation. The metal may be selected from the following metals: titanium, niobium, tantalum, aluminium, zirconium, steel, steel being coated with a layer which separates the iron of the steel from the atmosphere used in the CVD-process and forms covalent bonds to the diamond layer. Suitable layers are for example layers made of titanium boron nitride or chromium carbide.

The substrate has advantageously a thickness in the range of 0.1 to 20.0 mm. The diamond layer may have a thickness in the range of 2 µm to 200 µm.

According to an advantageous embodiment of the invention the diamond layer is provided on the opposite sides of the substrate. Thereby the effectiveness of the electrode can be enhanced remarkably. The substrates may have an angular, preferably a rectangular, form which makes it easy to manufacture for example large-dimension flat electrodes. However, it is also possible that the substrates have a curved surface. The substrates may be tubes, slabs, rods or plates. Furthermore the substrate may be an expanded metal. It may have one or more apertures. By joining in particular substrates having a curved surface it is possible to manufacture large-dimension electrodes which may have the form of large-dimension tubes or the like.

Embodiments of the invention are now described by way of nonlimiting examples with reference to the accompanying drawings in which:
- Fig. 1: shows a top view of a first electrode,
- Fig. 2: shows a schematic sectional view through a joint of the first electrode,
- Fig. 3: shows a top view of a second electrode,
- Fig. 4: shows a schematic sectional view through a joint of the second electrode,
- Fig. 5: shows a schematic sectional view through a joint of a third electrode,
- Fig. 6: shows a top view of a fourth electrode,
- Fig. 7: shows a perspective view of a fifth electrode,
- Fig. 8: shows a SEM-photograph of electrode elements being connected by a welded joint and
- Fig. 9: shows a sectional view of the electrode shown in Fig. 8.

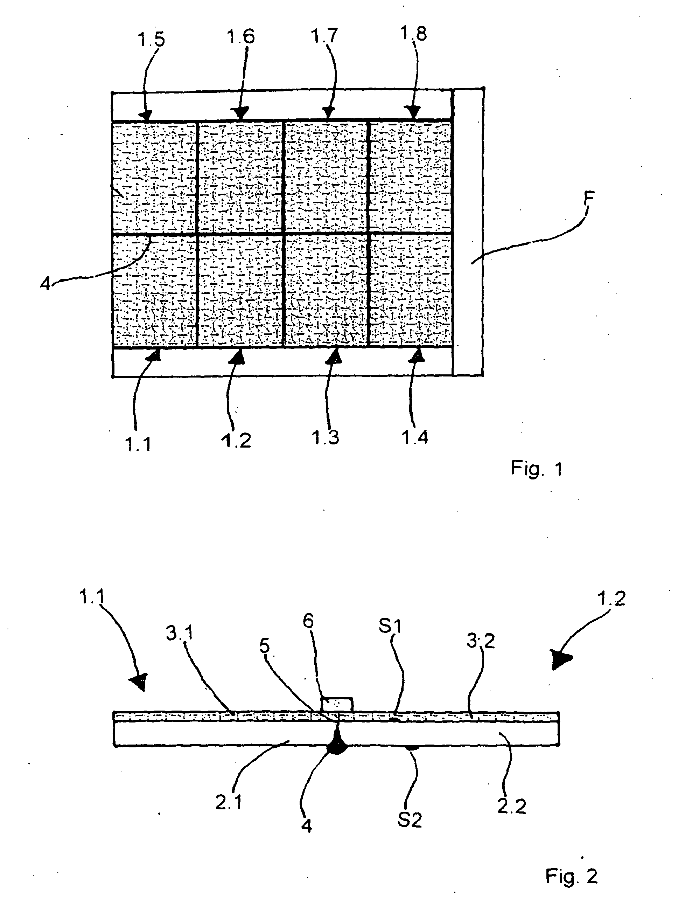

The electrodes shown in Fig. 1 to 7 are made of electrode elements 1.1, 1.2, 1.3, ..., 1.n. Each electrode elements comprises a substrate 2.1, 2.2, 2.3, ..., 2.n which is preferably made of titanium or another suitable self passivating metal. Each substrate 2.1, 2.2, 2.3, ..., 2.n is covered on a first surface S1 with a diamond layer 3.1, 3.2, 3.3, ..., 3.n. The diamond layer may be made by CVD. It may have a thickness in the range of 0.1 µm to 200 µm, preferably of 2 µm to 20 µm. The diamond exhibits an electrical conductivity which is created by a doping for example of boron. The amount of the doping contained in the diamond may be in the range of 10 ppm to 3000 ppm, preferably in the range of 100 ppm to 1000 ppm.

As can be seen in particular from Fig. 1 the electrode may be provided along their edges with a fastening structure F which may be made by strips of sheet metal. Such a fastening structure F is preferably connected to the electrode by a further joint which may be similar to the joints 4 described above. The further joint for connecting the fastening structure F is preferably also an electric conductive joint. The electrode may be connected to a power supply via the fastening structure.

As can be seen in particular from Fig. 2 the substrates 2.1, 2.2, 2.3, ..., 2.n of the electrode elements 1.1, 1.2, 1.3, ..., 1.n are connected to each other by a joint 4 which is provided on a second surface S2 which is opposite of the first surface S1. The joint 4 is provided along the flanges of the substrates 2.1, 2.2, 2.3, ..., 2.n and is made by welding. A small gap 5 between the adjacent diamond layer 3.1, 3.2, 3.3, ...., 3.n is filled and/or covered by an anti-corrosion material 6 which protects the electrode elements 1.1, 1.2, 1.3, ..., 1.n against corrosion along the flanges. The anti-corrosion material 6 may be made of silicone, plastic or other suitable materials.

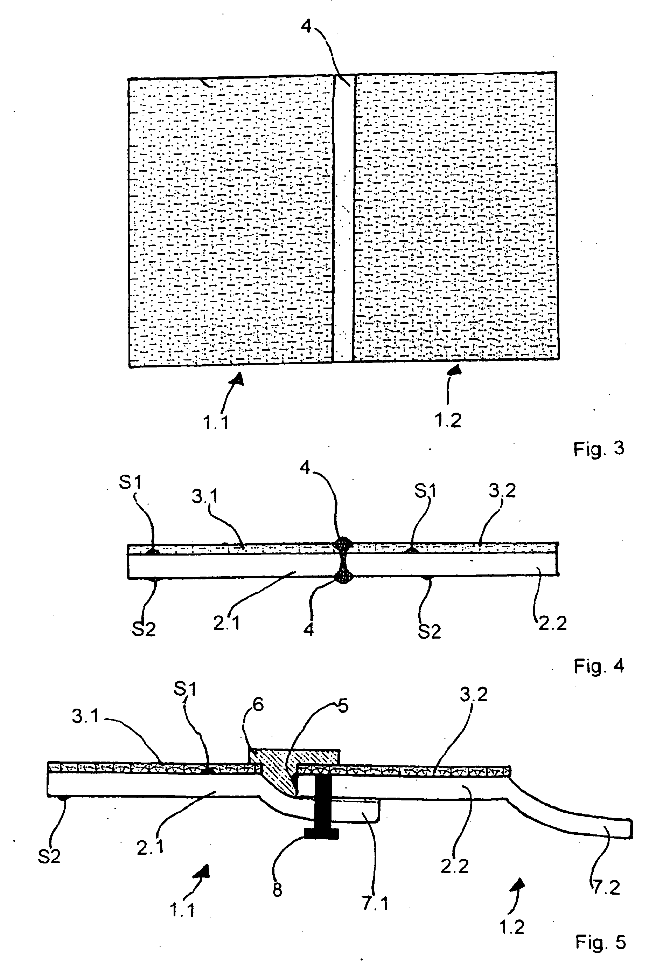

Fig. 3 and 4 show a second electrode. As can be seen in particular from Fig. 4 the joint 4 is provided on a first side S1 and on the second side S2 on the flanges of the adjacent substrates 2.1, 2.2. In particular the joint 4 on the first side S1 of the substrates 2.1, 2.2 may also be covered by an anti-corrosion material 6 (not shown here).

Fig. 5 shows a schematic sectional view of a third electrode. Therein each of the electrode elements 1.1, 1.2, 1.3, ..., 1.n has a flange 7.1, 7.2, 7.3, ..., 7.n which is bent in a S-like manner. Along the flange there is provided a strip on which the diamond layer 3.1, 3.2, 3.3, ..., 3.n does not cover the substrate 2.1, 2.2, 2.3, ..., 2.n. The form of the flange 7.1, 7.2, is such that a flat end of an adjacent electrode element 1.1, 1.2, 1.3, ..., 1.n may be positioned on the first surface S1 of the flange 7.1, 7.2, 7.3, ..., 7.n. The flange 7.1, 7.2, 7.3, ..., 7.n is bent such that when an adjacent electrode element 1.1, 1.2., 1.3, ..., 1.n is laying on the bent portion the substrates 2.1, 2.2, 2.3, ..., 2.n are essentially on the same level so that the electrode exhibits a more or less even surface. The joint 4 may be in this case a force locked linkage provided by a fastening element 8 like a screw, a bold or other like. A gap 5 between the adjacent electrode elements 1.1, 1.2, 1.3, ..., 1.n may be filled and/or covered by the anti-corrosion layer 6.

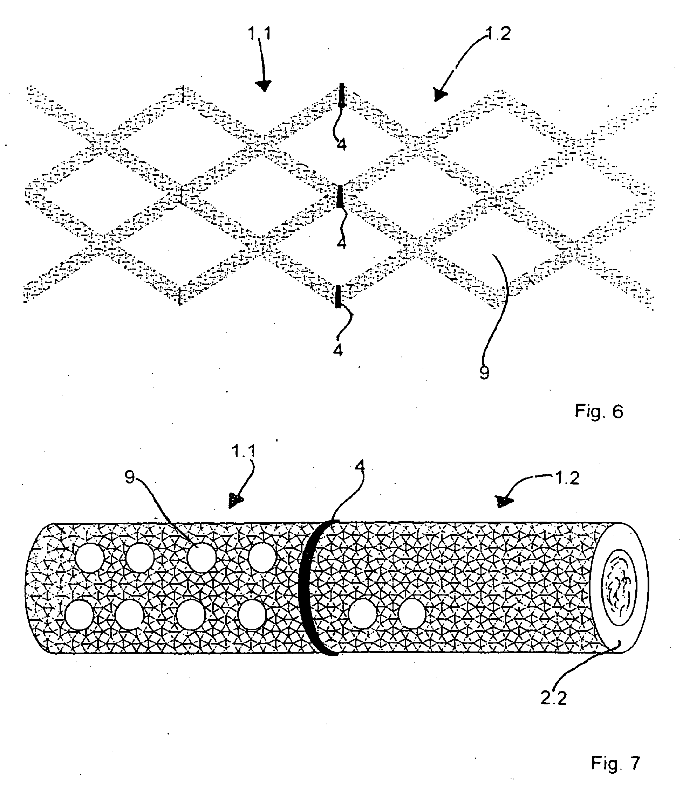

Fig. 6 shows a top view of a forth electrode. Therein the electrode elements 1.1, 1.2, 1.3, ..., 1.n are made from expended metal substrates having a plurality of apertures 9. The apertures 9 have in this particular embodiment the form of routes. However, the aperture 9 can have any form like circles, triangular or rectangular forms and the like.

Fig. 7 shows a fifth electrode. Therein the electrode elements 1.1, 1.2 are made of tubes having apertures 9. Like in Fig. 6 the substrates 2.1, 2.2, 2.3, ..., 2.n are connected by welded joints 4.

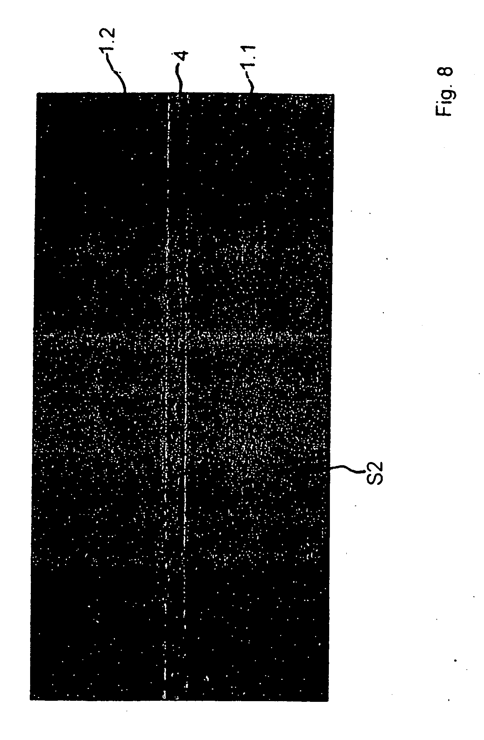

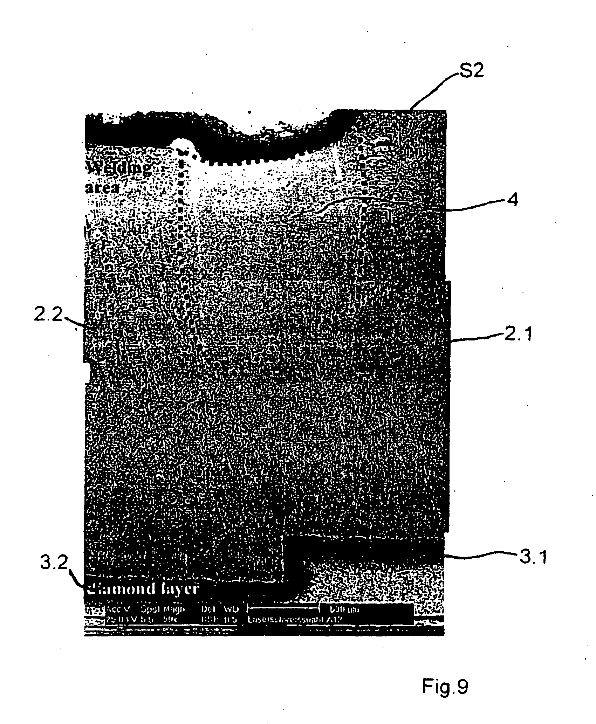

Fig. 8 and 9 show SEM-pictures of an electrode which is similar to the electrode shown schematically in Fig. 2. Fig. 8 shows a top view on the second surface of two electrode elements 1.1 and 1.2 which are connected by a joint 4 which has been made by welding. The joint has been produced by leaser welding with a CO₂-laser having a power of 5 kW. As an output power there has been used 3 kW and a welding velocity of 3,5 m/min. As inertgas helium gas has been used. As can be seen in particular from Fig. 9 the welded joint has a depth of around 3 mm and is provided just at the second surface S2 of the first 2.1 and second substrate 2.2.

Although it is not shown in the figures it is clear that also the second surface S2 may be additionally coated with a diamond layer 3.1, 3.2, 3.3, ..., 3.n. The anti-corrosion layer 6 may be provided on each joint 4, 8. The proposed electrode can have any form.

The electrode proposed according to the present invention can be in particular an anode for a treatment of waste water an the like.

### Reference list

- 1.1, ..., 1.n: electrode elements
- 2.1, ..., 2.n: substrate
- 3.1, ..., 3.n: diamond layer
- 4: joint
- 5: gap
- 6: anti-corrosion material
- 7.1, ..., 7.n: flange
- 8: fastening element
- 9: aperture
- S1: first surface
- S2: second surface
- F: fastening structure

## Claims

1. Electrode comprising a plurality of substrates (2.1, 2.2, 2.3, ..., 2.n) made of a metal, each substrate (2.1, 2.2, 2.3, ..., 2.n) being coated at least at one of its sides with a layer (3.1, 3.2, 3.3, ..., 3.n) made of electroconductive diamond,
**characterised in that**
the substrates (2.1, 2.2, 2.3, ..., 2.n) are joined together by a joint (4.8) which is provided on at least one of their flanges (7.1, 7.2, 7.3, ..., 7.n) to form a mechanically stable electrode body, and wherein the joint (4, 8) provides a electric conductivity between the substrates (2.1, 2.2, 2.3, ..., 2.n).

2. Electrode according to claim 1, wherein the diamond and/or the substrates has/have an electrical resistance of less than 100 Ωcm, preferably of less than 0,1 Ωcm.

3. Electrode according to one of the preceding claims, wherein the joint (4, 8) between the substrates (2.1, 2.2, 2.3, ..., 2.n) has an electrical resistance of less than 100 Ωcm, preferably of less than 0,1 Ωcm.

4. Electrode according to one of the preceding claims, wherein the diamond contains a doping.

5. Electrode according to one of the preceding claims, wherein the doping comprises at least one of the following substances: boron, nitrogen.

6. Electrode according to one of the preceding claims, wherein the amount of the doping contained in the diamond is in the range of 10 ppm to 3000'ppm, preferably in the range of 100 ppm to 1000 ppm.

7. Electrode according to one of the preceding claims, wherein the joint (4, 8) provides a force locked linkage and/or a metallic continuity of the substrates.

8. Electrode according to one of the preceding claims, wherein the force locked linkage is made by a screw joint, a retrieved joint, a clamped joint, a rebated joint or a push fit fitting.

9. Electrode according to one of the preceding claims, wherein the metallic continuity of the joined substrates (2.1, 2.2, 2.3, ..., 2.n) is made by a welded joint (4).

10. Electrode according to one of the preceding claims, wherein the welded joint (4) is made by diffusion welding, electron beam welding or laser welding.

11. Electrode according to one of the preceding claims, wherein the joint (4, 8) is a soldered joint.

12. Electrode according to one of the preceding claims, wherein the joint (4, 8) is made of two opposing welded joints provided on each side (S1, S2) of the substrate (2.1, 2.2, 2.3, ..., 2.n).

13. Electrode according to one of the preceding claims, wherein the joint (4, 8) is covered by an anti-corrosion layer (6).

14. Electrode according to one of the preceding claims, wherein the anti-corrosion layer (6) is a self passivating layer of the metal or is made of an organic material, in particular of a plastic, or an anorganic material.

15. Electrode according to one of the preceding claims, wherein the joint (4, 8) is made by an electroconductive polymer.

16. Electrode according to one of the preceding claims, wherein the metal is a self passivating metal.

17. Electrode according to one of the preceding claims, wherein the metal is selected form the following metals: titanium, niobium, tantalum, aluminium, zirconium, steel, steel being coated with titanium boron nitride or chromium carbide.

18. Electrode according to one of the preceding claims, wherein the substrate (2.1, 2.2, 2.3, ..., 2.n) has a thickness in the range of 0.1 to 20.0 mm.

19. Electrode according to one of the preceding claims, wherein the diamond layer (3,1, 3,2, 3,3 ..., 3.n) has a thickness in the range of 2 µm to 200 µm.

20. Electrode according to one of the preceding claims, wherein the diamond layer (3.1, 3.2, 3.3, ..., 3.n) is provided on the opposite sides (S1, S2) of the substrate (2.1, 2.2, 2.3, ..., 2.n).

21. Electrode according to one of the preceding claims, wherein the substrates (2.1, 2.2, 2.3, ..., 2.n) have an angular, preferably a rectangular, form.

22. Electrode according to one of the preceding claims, wherein the substrates (2.1, 2.2, 2.3, ..., 2.n) have a flat or curved surface.

23. Electrode according to one of the preceding claims, wherein the substrates (2.1, 2.2, 2.3, ..., 2.n) are tubes, slabs, rods or plates.

24. Electrode according to one of the preceding claims, wherein at least one substrate (2.1, 2.2, 2.3, ..., 2.n) has at least one aperture (9).

## Patentansprüche

1. Elektrode, umfassend eine Vielzahl von aus Metall hergestellten Substraten (2.1, 2.2., 2.3, ..., 2.n), wobei jedes Substrat (2.1, 2.2., 2.3, ..., 2.n) auf wenigstens einer seiner Seiten mit einer aus elektrisch leitendem Diamant hergestellten Schicht (3.1, 3.2., 3.3, ..., 3.n) überzogen ist,
**dadurch gekennzeichnet, dass**
die Substrate (2.1, 2.2., 2.3, ..., 2.n) zusammen durch eine Verbindung (4, 8) verbunden sind, welche an wenigstens einem ihrer Flansche (7.1, 7.2., 7.3, ..., 7.n) vorgesehen ist, um einen mechanisch stabilen Elektrodenkörper zu bilden, und wobei die Verbindung (4, 8) eine elektrische Leitfähigkeit zwischen den Substraten (2.1, 2.2., 2.3, ..., 2.n) vorsieht.

2. Elektrode nach Anspruch 1, wobei der Diamant und/oder die Substrate einen elektrischen Widerstand von weniger als 100 Ωcm, vorzugsweise von weniger als 0,1 Ωcm, aufweist/aufweisen.

3. Elektrode nach einem der vorhergehenden Ansprüche, wobei die Verbindung (4, 8) zwischen den Substraten (2.1, 2.2., 2.3, ..., 2.n) einen elektrischen Widerstand von weniger als 100 Ωcm, vorzugsweise von weniger als 0,1 Ωcm, aufweist.

4. Elektrode nach einem der vorhergehenden Ansprüche, wobei der Diamant einen Dotierstoff enthält.

5. Elektrode nach einem der vorhergehenden Ansprüche, wobei der Dotierstoff wenigstens eine der folgenden Substanzen umfasst: Bor, Stickstoff.

6. Elektrode nach einem der vorhergehenden Ansprüche, wobei die in dem Diamant enthaltene Menge des Dotierstoffs im Bereich von 10 ppm bis 3000 ppm, vorzugsweise im Bereich von 100 ppm bis 1000 ppm, liegt.

7. Elektrode nach einem der vorhergehenden Ansprüche, wobei die Verbindung (4, 8) eine kraftschlüssige Verbindung und/oder einen metallischen Durchgang des Substrats vorsieht.

8. Elektrode nach einem der vorhergehenden Ansprüche, wobei die kraftschlüssige Verbindung durch eine Schraubverbindung, eine lösbare Verbindung, eine Klemmverbindung, eine Falzverbindung oder eine Steckverbindung hergestellt ist.

9. Elektrode nach einem der vorhergehenden Ansprüche, wobei der metallische Durchgang der verbundenen Substrate (2.1, 2.2., 2.3, ..., 2.n) durch eine Schweißverbindung (4) hergestellt ist.

10. Elektrode nach einem der vorhergehenden Ansprüche, wobei die Schweißverbindung (4) durch Diffusionsschweißen, Elektronenstrahlschweißen oder Laserschweißen hergestellt ist.

11. Elektrode nach einem der vorhergehenden Ansprüche, wobei die Verbindung (4, 8) eine Lötverbindung ist.

12. Elektrode nach einem der vorhergehenden Ansprüche, wobei die Verbindung (4, 8) aus zwei gegenüberliegenden, an jeder Seite (S1, S2) des Substrats (2.1, 2.2., 2.3, ..., 2.n) vorgesehenen Schweißverbindungen hergestellt ist.

13. Elektrode nach einem der vorhergehenden Ansprüche, wobei die Verbindung (4, 8) durch eine Antikorrosionsschicht (6) abgedeckt ist.

14. Elektrode nach einem der vorhergehenden Ansprüche, wobei die Antikorrosionsschicht (6) eine selbst passivierende Schicht des Metalls ist oder aus einem organischen Material, insbesondere aus einem Kunststoff, oder einem anorganischen Material hergestellt ist.

15. Elektrode nach einem der vorhergehenden Ansprüche, wobei die Verbindung (4, 8) durch ein elektrisch leitendes Polymer hergestellt ist.

16. Elektrode nach einem der vorhergehenden Ansprüche, wobei das Metall ein selbst passivierendes Metall ist.

17. Elektrode nach einem der vorhergehenden Ansprüche, wobei das Metall aus den folgenden Metallen ausgewählt ist: Titan, Niob, Tantal, Aluminium, Zirkon, Stahl, mit Titanbornitrid oder Chromcarbid überzogener Stahl.

18. Elektrode nach einem der vorhergehenden Ansprüche, wobei das Substrat (2.1, 2.2., 2.3, ..., 2.n) eine Stärke im Bereich von 0,1 bis 20,0 mm aufweist.

19. Elektrode nach einem der vorhergehenden Ansprüche, wobei die Diamantschicht (3.1, 3.2., 3.3, ..., 3.n) eine Stärke im Bereich von 2 µm bis 200 µm aufweist.

20. Elektrode nach einem der vorhergehenden Ansprüche, wobei die Diamantschicht (3.1, 3.2., 3.3, ..., 3.n) an den gegenüberliegenden Seiten (S1, S2) des Substrats (2.1, 2.2., 2.3, ..., 2.n) vorgesehen ist.

21. Elektrode nach einem der vorhergehenden Ansprüche, wobei die Substrate (2.1, 2.2., 2.3, ..., 2.n) eine eckige, vorzugsweise eine rechteckige, Form aufweisen.

22. Elektrode nach einem der vorhergehenden Ansprüche, wobei die Substrate (2.1, 2.2., 2.3, ..., 2.n) eine flache oder gekrümmte Oberfläche aufweisen.

23. Elektrode nach einem der vorhergehenden Ansprüche, wobei die Substrate (2.1, 2.2., 2.3, ..., 2.n) Rohre, Scheiben, Stäbe oder Platten sind.

24. Elektrode nach einem der vorhergehenden Ansprüche, wobei wenigstens ein Substrat (2.1, 2.2., 2.3, ..., 2.n) wenigstens eine Öffnung (9) aufweist.

## Revendications

1. Electrode comprenant un grand nombre de substrats (2.1, 2.2, 2.3, ..., 2.n) en métal, chaque substrat (2.1, 2.2, 2.3, ..., 2.n) étant revêtu au moins sur un de ses côtés d'une couche (3.1, 3.2, 3.3, ..., 3.n) de diamant électroconducteur,
**caractérisé en ce que**
les substrats (2.1, 2.2, 2.3, ..., 2.n) sont reliés par un raccord (4, 8) qui est prévu sur au moins une de leurs brides (7.1, 7.2, 7.3., ..., 7.n) pour former un corps d'électrode stable mécaniquement et où le raccord (4, 8) assure une conductivité électrique entre les substrats (2.1, 2.2, 2.3, ..., 2.n).

2. Electrode selon la revendication 1, où le diamant et/ou les substrats a/ont une résistance électrique inférieure à 100 Ωcm, de préférence inférieure à 0,1 Ωcm.

3. Electrode selon l'une des revendications précédentes, où le raccord (4, 8) entre les substrats (2.1, 2.2, 2.3, ..., 2.n) a une résistance électrique inférieure à 100 Ωcm, de préférence inférieure à 0,1 Ωcm.

4. Electrode selon l'une des revendications précédentes, où le diamant contient un dopage.

5. Electrode selon l'une des revendications précédentes, où le dopage comprend au moins l'une des substances suivantes : bore, azote.

6. Electrode selon l'une des revendications précédentes, où la quantité du dopage contenu dans le diamant est comprise dans la plage de 10 ppm à 3000 ppm, de préférence dans la plage de 100 ppm à 1000 ppm.

7. Electrode selon l'une des revendications précédentes, où le raccord (4, 8) établit une connexion bloquée forcée et/ou une continuité métallique des substrats.

8. Electrode selon l'une des revendications précédentes, où la connexion bloquée forcée est établie par un raccord à vis, un raccord démontable, un raccord à bride, un raccord à feuillure ou un raccord instantané.

9. Electrode selon l'une des revendications précédentes, où la continuité métallique des substrats raccordés (2.1, 2.2, 2.3, ..., 2.n) est établie par un raccord soudé (4).

10. Electrode selon l'une des revendications précédentes, où le raccord soudé (4) est obtenu par soudage par diffusion, soudage par faisceau d'électrons ou soudage au laser.

11. Electrode selon l'une des revendications précédentes, où le raccord (4, 8) est un raccord brasé.

12. Electrode selon l'une des revendications précédentes, où le raccord (4, 8) est constitué de deux raccords soudés opposés prévus sur chaque côté (S1, S2) du substrat (2.1, 2.2, 2.3, ..., 2.n).

13. Electrode selon l'une des revendications précédentes, où le raccord (4, 8) est recouvert d'une couche anticorrosion (6).

14. Electrode selon l'une des revendications précédentes, où la couche anticorrosion (6) est une couche d'auto-passivation du métal ou une matière organique, en particulier une matière plastique, ou une matière anorganique.

15. Electrode selon l'une des revendications précédentes, où le raccord (4, 8) est un polymère électroconducteur.

16. Electrode selon l'une des revendications précédentes, où le métal est un métal d'auto-passivation.

17. Electrode selon l'une des revendications précédentes, où le métal est sélectionné parmi les métaux suivants : titane, niobium, tantale, aluminium, zirconium, acier, acier recouvert de nitrure de titane bore ou de carbure de chrome.

18. Electrode selon l'une des revendications précédentes, où le substrat (2.1, 2.2, 2.3, ..., 2.n) a une épaisseur comprise entre 0,1 et 20,0 mm.

19. Electrode selon l'une des revendications précédentes, où la couche diamantée (2.1, 2.2, 2.3, ..., 2.n) a une épaisseur comprise entre 2 µm et 200 µm.

20. Electrode selon l'une des revendications précédentes, où la couche diamantée (3.1, 3.2, 3.3, ..., 3.n) est fournie sur les côtés opposés (S1, S2) du substrat (2.1, 2.2, 2.3, ..., 2.n).

21. Electrode selon l'une des revendications précédentes, où les substrats (3.1, 3.2, 3.3, ..., 3.n) ont une forme angulaire, de préférence rectangulaire.

22. Electrode selon l'une des revendications précédentes, où les substrats (2.1, 2.2, 2.3, ..., 2.n) ont une surface plane ou courbe.

23. Electrode selon l'une des revendications précédentes, où les substrats (2.1, 2.2, 2.3, ..., 2.n) sont des tubes, des brames, des barres ou des plaques.

24. Electrode selon l'une des revendications précédentes, où au moins un substrat (2.1, 2.2, 2.3, ..., 2.n) a au moins une ouverture (9).
